Europäisches Patentamt

European Patent Office

Office européen des brevets

(11) Veröffentlichungsnummer: **0 152 150**
**A2**

(12) ## EUROPÄISCHE PATENTANMELDUNG

(21) Anmeldenummer: 85200163.5

(22) Anmeldetag: 11.02.85

(51) Int. Cl.⁴: **H 04 Q 7/04**

(30) Priorität: 15.02.84 DE 3405381

(43) Veröffentlichungstag der Anmeldung:
21.08.85 Patentblatt 85/34

(84) Benannte Vertragsstaaten:
AT CH DE FR GB LI SE

(71) Anmelder: Philips Kommunikations Industrie AG
Thurn-und-Taxis-Strasse 10
D-8500 Nürnberg 10(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
CH FR GB LI SE AT

(72) Erfinder: Logemann, Helmut
Kölner Strasse 12
D-6100 Darmstadt(DE)

(72) Erfinder: Pauschel, Gerhard
Neutscher Grund 12
D-6104 Seehain-Junghain(DE)

(74) Vertreter: Peuckert, Hermann et al,
Philips Patentverwaltung GmbH Billstrasse 80 Postfach
10 51 49
D-2000 Hamburg 28(DE)

(54) **Verfahren zur Verhinderung der unerlaubten Benutzung einer beweglichen Funkstation in einem Funkübertragungssystem.**

(57) Zur Verhinderung der unerlaubten Benutzung einer beweglichen Funkstation in einem Funkübertragungssytem werden, beim Verbindungsaufbau zwischen einer beweglichen Funkstation und einer Funkvermittlungsstelle, die Teilnehmernummer und die nach einer geheimen Schlüsselregel aus der Teilnehmernummer gebildete Kennung der beweglichen Funkstation miteinander verglichen und ausgewertet.

Um Fremdeingriffe in der beweglichen Funkstation angeordneten Einrichtungen, wie beispielsweise Rückkennungsempfänger, zu verhindern, wird der Vergleich zwischen, aus der Kennung durch Anwendung der inversen Schlüsselregel gebildete, Teilnehmernummer und der im Kennungsgeber gespeicherten Teilnehmernummer von der beweglichen Funkstation zur Funkvermittlungsstelle verlagert. Bei Übereinstimmung der so entstandenen Teilnehmernummer mit der gespeicherten Teilnehmernummer wird der Verbindungsaufbau fortgesetzt, im anderen Fall wird der Verbindungsaufbau abgebrochen.

FIG.1

EP 0 152 150 A2

Philips Kommunikations Industrie AG    PHD 84377EP

N.V. Philips'Gloeilampenfabrieken    23.01.1985

Verfahren zur Verhinderung der unerlaubten Benutzung einer beweglichen Funkstation in einem Funkübertragungssystem

Die Erfindung betrifft ein Verfahren zur Verhinderung der unerlaubten Benutzung einer beweglichen
Funkstation in einem Funkübertragungssystem gemäß
dem Oberbegriff des Patentanspruchs 1.

Bei Funkübertragungssystemen erfolgt die Gebührenerfassung für durch eine bewegliche Funkstation
eingeleitete Gespräche in einer Funkvermittlungsstelle. Für alle Inlandsgespräche ist ein einheitlicher Gebührentakt zugrunde gelegt und für Auslandsgespräche gelten die Gebührentakte des Auslands-Selbstwählferndienstes. Zusätzlich zu diesen
Gesprächsgebühren wird ein Zuschlag für die Benutzung des Funkübertragungskanals erhoben.

Die Daten aller erfolgreichen und versuchten Gesprächen werden beispielsweise in der Funkvermittlungsstelle auf Magnetband erfaßt. Gespeichert
werden neben anderen statistischen Angaben die Daten der den Verbindungsaufbau vornehmenden Funkvermittlungseinrichtung, die Uhrzeit, die Gesprächsgebühren, die Kennung der beweglichen Funkstation, die gewählte Teilnehmernummer - z. B.
Rufnummer einer Teilnehmerstation des öffentlichen

-2-

Fernsprechnetzes - bei der Verkehrsrichtung mobilortsfest, die Gründe für das nicht Zustandekommen von Verbindungen und die Kanalnummer des Funkübertragungskanals.

Um zu verhindern, daß eine bewegliche Funkstation unberechtigterweise betrieben wird oder daß eine zugeteilte Teilnehmernummer geändert werden kann, ist u. a. ein Kennungsspeicher vorgesehen. Als Kennungsspeicher kann beispielsweise eine Magnetkarte verwendet werden, welche die Form einer Scheckkarte hat und die notwendigen Daten auf einen Magnetstreifen enthält. Um die bewegliche Funkstation zu betreiben, wird der Kennungsspeicher in einen Schlitz des Bediengeräts der beweglichen Funkstation eingeschoben und die Daten werden von einer Leseeinrichtung des Bediengeräts ausgelesen und einer Steuereinrichtung im Bediengerät zugeführt. Zur Vermeidung von Nachahmungen der Magnetkarten nach dem Telefonbuch ist jedem Teilnehmer des Funkübertragungssystems eine zweite "stille Teilnehmernummer" (Kennung) auf der Magnetkarte zugeteilt.

Aus der DT-PS 24 19 615 ist ein Verfahren zur Identifizierung einer Teilnehmerstation (bewegliche Funkstation) bekannt, bei dem zur Identitätsprüfung die Übereinstimmung von Rückkennung und Teilnehmernummer geprüft wird. Dabei wird die von einer beweglichen Funkstation zur Prüfung ihrer Identität ausgesandte Kennung, welche mittels eines dem Teilnehmer nicht bekannten Codes aus der Teilnehmernummer gebildet wird, zur Funkvermitt-lungsstelle übertragen. In der Funkvermittlungs-stelle wird die von der beweglichen Teilnehmersta

-3-

tion erhaltene Kennung mittels des inversen Codes entschlüsselt. Durch die Entschlüsselung entsteht als Rückkennung die Rufnummer (Teilnehmernummer) der betreffenden beweglichen Funkstation.

Manipulierte Kennungen, d. h. Kennungen, die ohne Anwendung der dem Teilnehmer nicht bekannten Schlüsselregel gebildet worden sind, werden in der Funkvermittlungsstelle zwar ebenfalls entschlüsselt und als Rückkennung zur beweglichen Funkstation übertragen. Die so entstandene Rückkennung entspricht jedoch nicht derjenigen, die mit der Teilnehmernummer der beweglichen Funkstation identisch ist. Die in der beweglichen Funkstation empfangene Rückkennung wird mit der - beispielsweise auf der Magnetkarte befindlichen - Teilnehmernummer verglichen und beim Feststellen keiner Übereinstimmung im Rückkennungsempfänger wird in der beweglichen Funkstation die aufgebaute Funkverbindung ausgelöst.

Durch Manipulation des Kennungsgebers, d. h. beispielsweise der Magnetkarte, und durch Manipulation des Rückkennungsempfängers in der beweglichen Funkstation kann die bewegliche Funkstation mit einer fremden Kennung betrieben werden und die für diese bewegliche Funkstation aufgelaufenen Gesprächsgebühren einem anderen Teilnehmer des Funkübertragungssystems angelastet werden.

Der Erfindung liegt die Aufgabe zugrunde, ein aus der DT-PS 24 19 615 bekanntes Verfahren derartig weiterzubilden, daß nicht durch Manipulation des Rückkennungsempfängers in der beweglichen Funkstation Gesprächsgebühren anderen Teilnehmern des Funkübertragungssystems angelastet werden.

-4-

Die Lösung dieser Aufgabe geht aus der Fassung des Patentanspruchs 1 hervor.

Dadurch, daß die Entscheidung über auslösen oder weiterschalten beim Verbindungsaufbau von der beweglichen Funkstation zur Funkvermittlungsstelle verlagert worden ist, kann nicht mehr durch Manipulation des Rückkennungsempfängers in der beweglichen Funkstation Gebühren anderen Teilnehmern angelastet werden.

Die Erfindung wird nachstehend anhand der in der Zeichnung dargestellten Ausführungsform näher beschrieben und erläutert. Es zeigt:

Fig. 1 das Blockschaltbild der beim bekannten Verfahren verwendeten Einrichtungen und

Fig. 2 das Blockschaltbild der beim Verfahren gemäß der Erfindung verwendeten Einrichtungen.

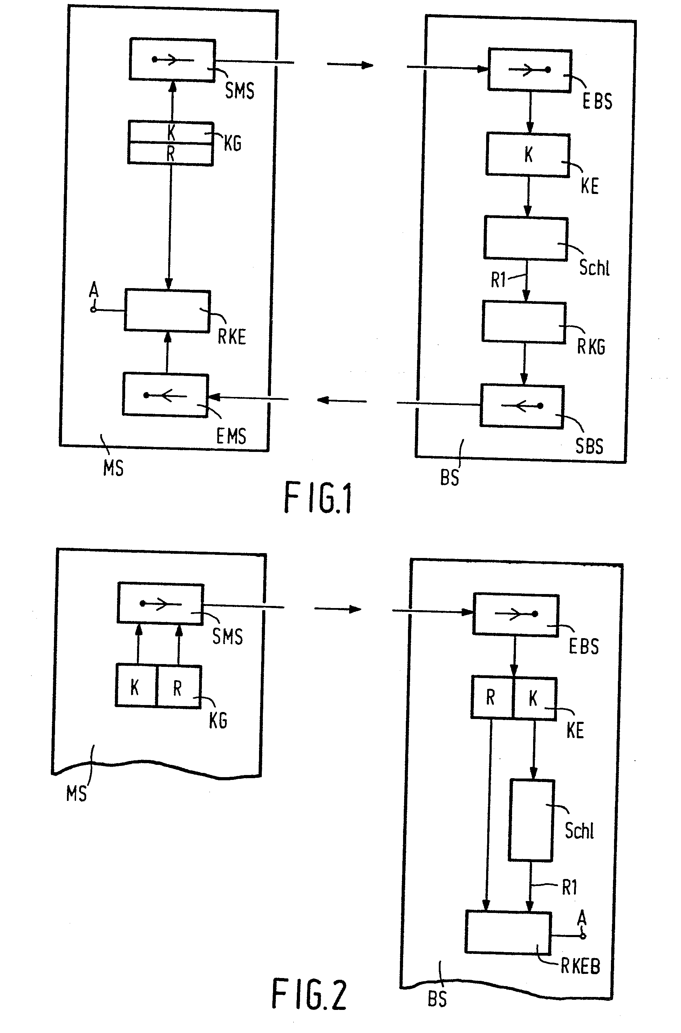

Für die in Fig. 1 dargestellte bewegliche Funkstation MS und die ortsfeste Funkvermittlungsstelle BS sind nur die für das bekannte Verfahren erforderlichen Einrichtungen gezeigt.

Die bewegliche Funkstation MS enthält (nach dem Einschieben des Kennungsspeichers in einen Schlitz des Bediengeräts) einen Kennungsgeber KG, beispielsweise in der Form einer Magnetkarte, auf welchem eine Teilnehmernummer R, entsprechend dem Eintrag im Telefonbuch, und eine nach einer, dem Teilnehmer nicht bekannten, Schlüsselregel gebildete Kennung K ("stille Teilnehmernummer") gespei-

-5-

-5-

chert sind. Beim Verbindungsaufbau wird die gespeicherte Kennung K mittels eines in der beweglichen Funkstation MS angeordneten Senders SMS zur Funkvermittlungsstelle BS übertragen.

In der Funkvermittlungsstelle BS wird die Kennung K von einem Empfänger EBS empfangen und in einem Kennungsempfänger KE zwischengespeichert. Die zwischengespeicherte Kennung K wird einer Entschlüsselungseinrichtung Schl zugeführt, welche durch Anwendung der inversen Schlüsselregel aus der Kennung K die Teilnehmernummer R1 ermittelt. Diese Teilnehmernummer R1 wird einem in der ortsfesten Funkstation (Funkvermittlungseinrichtung) BS angeordneten Rückkennungsgeber RKG zugeführt.

Mittels eines in der Funkvermittlungsstelle BS angeordneten Senders SBS wird diese Teilnehmernummer R1 zur beweglichen Funkstation MS übertragen und dort in einem Empfänger EMS empfangen. Die empfangene Teilnehmernummer R1 und die im Kennungsgeber KG der beweglichen Funkstation MS gespeicherte Teilnehmernummer R werden einem Rückkennungsempfänger RKE der beweglichen Funkstation MS zugeführt und dort miteinander verglichen. Wird keine Übereinstimmung der beiden Teilnehmernummer R bzw. R1 festgestellt, so wird der Verbindungsaufbau abgebrochen. Bei Übereinstimmung der beiden Teilnehmernummern R bzw. R1 wird der Verbindungsaufbau fortgesetzt. Das entsprechende Schaltkriterium ist am Ausgang A in der beweglichen Funkstation MS abgreifbar.

Beim erfindungsgemäßen Verfahren, dargestellt in Fig. 2, werden die im Kennungsgeber KG gespeicher-

-6-

-6-

te Teilnehmernummer R und die Kennung K beim Verbindungsaufbau ausgelesen. Kennung K und Teilnehmernummer R werden vom Sender SMS über einen Funkübertragungskanal zur Funkvermittlungsstelle BS
übertragen und dort vom Empfänger EBS empfangen
und dem Kennungsempfänger KE zugeführt.

Die empfangene Teilnehmernummer R und Kennung K
werden im Kennungsempfänger KE der Funkvermittlungsstelle BS zwischengespeichert. Die zwischengespeicherte Kennung K wird mittels der Entschlüsselungseinrichtung Schl entschlüsselt und die so
entstandene Teilnehmernummer R1 einem in der Funkvermittlungsstelle BS angeordneten Rückkennungsempfänger RKEB zugeführt. Im Rückkennungsempfänger
RKEB werden die zwischengespeicherte Teilnehmernummer R mit der nach der Entschlüsselung der Kennung K entstandenen Teilnehmernummer R1 verglichen. Bei Übereinstimmung wird der Verbindungsaufbau fortgesetzt und bei nicht Übereinstimmung wird
der Verbindungsaufbau abgebrochen. Ein entsprechendes Kriterium ist am Ausgang A in der Funkvermittlungsstelle BS abgreifbar.

Durch die Verlagerung der Entscheidung - ob der
Verbindungsaufbau fortgesetzt oder ob abgebrochen
wird - in die Funkvermittlungsstelle BS können
Fremdeingriffe zum Betreiben von beweglichen Funkstationen MS mit fremder Kennung K besser verhindert werden.

Philips Kommunikations Industrie AG     PHD 84377EP
N.V. Philips'Gloeilampenfabrieken    ·    23.01.1985

Patentanspruch

1. Verfahren zur Verhinderung der unerlaubten Benutzung einer beweglichen Funkstation in einem Funkübertragungssystem, bei dem in einer Funkvermittlungsstelle beim Verbindungsaufbau die Teilnehmernummer und die nach einer geheimen Schlüsselregel aus der Teilnehmernummer gebildete Kennung der beweglichen Funkstation miteinander verglichen und ausgewertet werden, dadurch gekennzeichnet, daß in der beweglichen Funkstation (MS) in einem Kennungsgeber (KG) gespeicherte Teilnehmernummer (R) und Kennung (K) beim Verbindungsaufbau ausgelesen und mittels eines in der beweglichen Funkstation (MS) angeordneten Senders (SMS) über einen Funkübertragungskanal zur Funkvermittlungsstelle (BS) übertragen werden, daß die Teilnehmernummer (R) und die Kennung (K) in der Funkvermittlungsstelle (BS) von einem Empfänger (EBS) empfangen und einem Kennungsempfänger (KE) zugeführt werden, daß die empfangene Teilnehmernummer (R) und Kennung (K) in der Funkvermittlungsstelle (BS) zwischengespeichert werden und daß in der Funkvermittlungsstelle (BS) nach Entschlüsselung der Kennung (K) mittels einer Entschlüsselungseinrichtung (Schl) die so entstandene Teilnehmernummer (R1) in einem Rückkennungsem-

-8-

pfänger (RKEB) der Funkvermittlungseinrichtung
(BS) mit der zwischengespeicherten Teilnehmernummer (R) verglichen wird und bei Übereinstimmung der Verbindungsaufbau fortgesetzt und bei
nicht Übereinstimmung der Verbindungsaufbau abgebrochen wird.

1/1

0152150

FIG.1

FIG.2

PHD 84-277